Europäisches Patentamt

European Patent Office

Office européen des brevets

(11) Numéro de publication: **0 273 786**
**A2**

## (12) DEMANDE DE BREVET EUROPEEN

(21) Numéro de dépôt: **87402641.2**

(22) Date de dépôt: **24.11.87**

(51) Int. Cl.⁴: **H 02 G 3/06**

(30) Priorité: **04.12.86 FR 8616970**

(43) Date de publication de la demande:
**06.07.88 Bulletin 88/27**

(84) Etats contractants désignés:
**AT BE CH DE ES GB IT LI NL SE**

(71) Demandeur: **GERARD MANG S.A.**
**7, Avenue Claude-Vellefaux**
**F-75010 Paris (FR)**

(72) Inventeur: **Marchesseau, Jack**
**8, rue de la Vènerie**
**La Clairière F-78120 Rambouillet (FR)**

(74) Mandataire: **Tony-Durand, Serge**
**Cabinet Tony-Durand 77, rue Boissière**
**F-75116 Paris (FR)**

(54) **Dispositif serre-câble pour appareil électrique de type mobile et appareil équipé d'un tel dispositif.**

(57) Ce dispositif sere-câble est destiné à l'immobilisation d'un câble conducteur à l'intérieur d'un appareil électrique de type mobile, en amont des bornes de branchement des conducteurs de ce câble.

Ce dispositif comporte un siège de réception de ce câble, lequel siège est solidaire du boîtier de l'appareil correspondant et est formé de deux nervures parallèles (8). Ce dispositif comprend en outre une barrette pivotante (10) de blocage, articulée à l'une de ses extrémités et qui, dans sa position de rabattement, se trouve placée en regard de l'intervalle existant entre les deux nervures parallèles (8) formant le siège de réception, un organe de retenue (12, 13) assurant le verrouillage de la barrette de blocage (10) dans sa position de rabattement.

Ce dispositif peut équiper toutes sortes d'appareils électriques de type mobile.

Fig. 5

## Description

"Dispositif serre-câble pour appareil électrique de type mobile et appareil équipé d'un tel dispositif"

La présente invention concerne les appareils électriques de type mobile - tels que : prolongateurs, interrupteurs, poussoirs de commande, boites à boutons, prises de courant, etc. -, c'est-à-dire tous les appareils électriques raccordés à au moins un câble conducteur souple.

Ce raccordement est assuré par branchement des fils conducteurs du câble correspondant sur les bornes prévues dans un tel appareil. Cependant il est indispensable que les tractions, qui s'exerceront inévitablement sur le câble, ne soient pas transmises aux bornes de branchement, car ceci risquerait de provoquer l'arrachement des conducteurs.

Pour éviter ce risque, les appareils du type en cause comportent habituellement des dispositifs serre-câble destinés à assurer la fixation de l'extrémité du câble correspondant sur le boîtier de l'appareil. Ces dispositifs sont le plus souvent constitués par un simple étrier fixé au moyen de deux vis sur la paroi correspondante du boîtier. De tels dispositifs ne répondent pas à certains règlements internationaux déterminant les normes de conformité et qui exigent que les éléments constituant un serre-câble soient imperdables. Par ailleurs, les dispositifs de ce genre sont d'un prix de revient relativement élevé compte tenu de la présence de deux vis de fixation et de la nécessité de prévoir des filetages correspondants. Ceci empêche donc les appareils ainsi équipés d'être concurrentiels.

Le DE 2.619.610 décrit un dispositif serre-câble de conception plus simple que les dispositifs antérieurs. Ce dispositif comporte une barrette pivotante de blocage disposée en regard d'un siège de réception du câble à immobiliser. Cette barrette est retenue dans sa position de blocage par un système d'accrochage. Cependant il n'est pas prévu un siège de forme particulière pour assurer une parfaite immobilisation en place du câble à immobiliser. Par ailleurs la barrette de blocage n'est pas elle-même immobilisée à l'encontre d'efforts de traction exercés par le câble. Dans ces conditions il peut se produire une déformation de l'ensemble et un arrachement du câble si celui-ci est soumis à des efforts importants de traction.

C'est pourquoi la présente invention a pour objet un dispositif serre-câble destiné à éviter ces inconvénients et qui est conçu de façon à assurer une parfaite fixation en place de l'extrémité du câble conducteur sur le boîtier de l'appareil électrique correspondant.

A cet effet l'invention a pour objet un dispositif serre-câble destiné à l'immobilisation d'un câble conducteur à l'intérieur d'un appareil électrique de type mobile, ce dispositif comportant une barrette pivotante de blocage, articulée à l'une de ses extrémités et qui, dans sa position de rabattement, se trouve placée en regard d'un siège de réception apte à recevoir le câble à immobiliser, des moyens de verrouillage assurant la retenue de la barrette de blocage dans sa position de rabattement, caractérisée en ce que le siège de réception du câble à immobiliser est constitué par le fond de deux échancrures, prévues l'une en regard de l'autre, dans deux joues parallèles solidaires de la paroi correspondante du boîtier de l'appareil et qui sont disposées transversalement à l'axe de la position prévue pour l'extrémité du câble, la barrette pivotante de blocage venant se placer entre ces deux joues dans sa position de rabattement.

Compte tenu de la conception et de la nature des différents éléments constitutifs du présent dispositif, ceux-ci peuvent être réalisés par moulage en matière plastique et ils peuvent alors être fabriqués d'une seule pièce avec l'une des parois du boîtier de l'appareil électrique correspondant, par exemple le socle de cet appareil. Du reste la présente invention a également pour objet tous appareils électriques de type mobile équipés d'un tel dispositif serre-câble dont les éléments constitutifs sont de préférence venus de moulage avec l'une des parois du boîtier d'un tel appareil.

Cependant d'autres particularités et avantages de l'objet de l'invention apparaitront au cours de la description suivante. Celle-ci est donnée en référence au dessin annexé à simple titre indicatif, et sur lequel :

La figure 1 est une vue partielle en plan du socle d'un appareil électrique comportant un dispositif serre-câble selon l'invention.

La figure 2 en est une vue en coupe transversale selon la ligne II-II de la figure 1.

La figure 3 est une vue partielle en coupe selon la ligne III-III de la figure 2.

La figure 4 est une vue similaire à la figure 1, mais qui représente le même appareil après fixation en place d'un câble conducteur.

La figure 5 est une vue en coupe transversale selon la ligne V-V de la figure 4.

La figure 6 est une vue partielle en coupe selon la ligne VI-VI de la figure 5.

La figure 7 est une vue similaire à la figure 1, mais qui correspond à une autre forme de réalisation du dispositif serre-câble, la barrette de blocage de celui-ci n'étant pas représentée.

La figure 8 en est une vue en coupe transversale selon la ligne VIII-VIII de la figure 7, mais dans laquelle la barrette de blocage est représentée.

La figure 9 est une vue partielle en coupe selon la ligne IX-IX de la figure 8, mais dans laquelle la barrette de blocage n'est pas représentée.

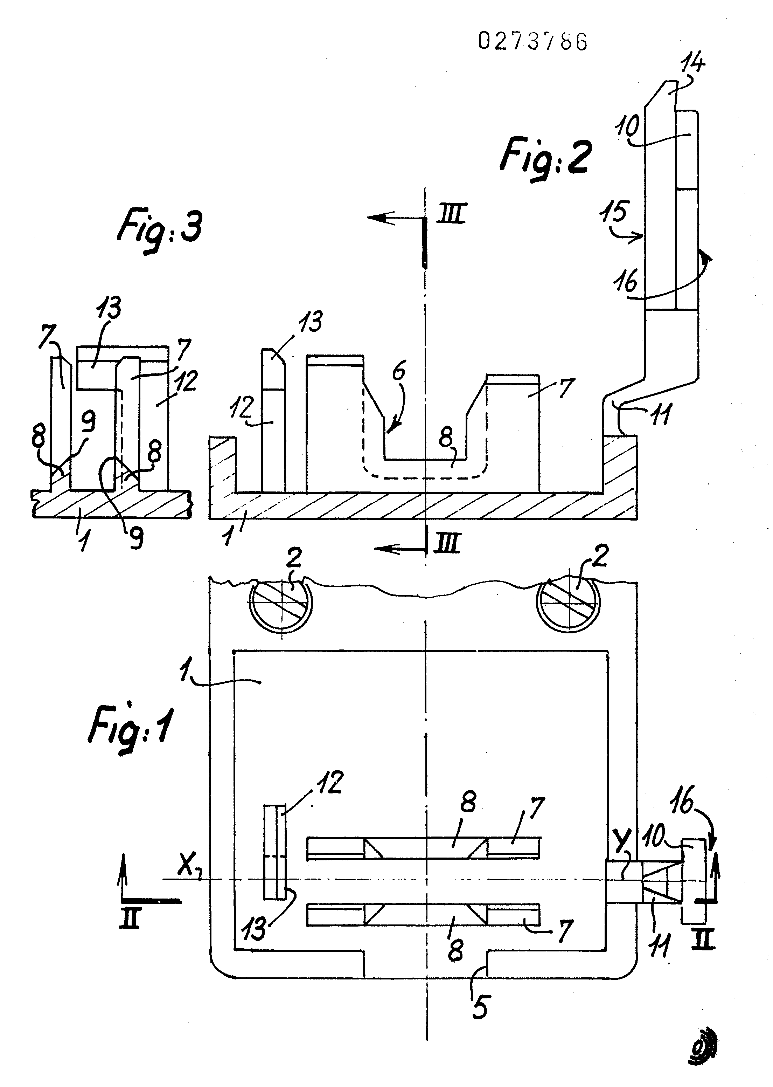

Dans l'exemple de réalisation représenté aux figures 1 à 6, les différents éléments constitutifs du dispositif serre-câble selon l'invention sont venus de moulage en matière plastique avec l'une des parois du boîtier de l'appareil correspondant, en l'occurrence le socle 1 de cet appareil. Comme déjà indiqué celui-ci est un appareil électrique mobile de nature quelconque, par exemple : un prolongateur, un interrupteur, etc. Cet appareil comporte deux bornes de branchement dont seules les vis 2 de serrage sont représentées. Ces bornes sont destinées à recevoir les extrémités des fils conducteurs 3 du socle électrique 4 correspondant. En conséquence, le dispositif serre-câble selon l'invention est situé en amont de ces bornes, donc entre celles-ci et l'ouverture 5 prévue dans le boîtier de l'appareil pour la pénétration de l'extrémité du câble 4.

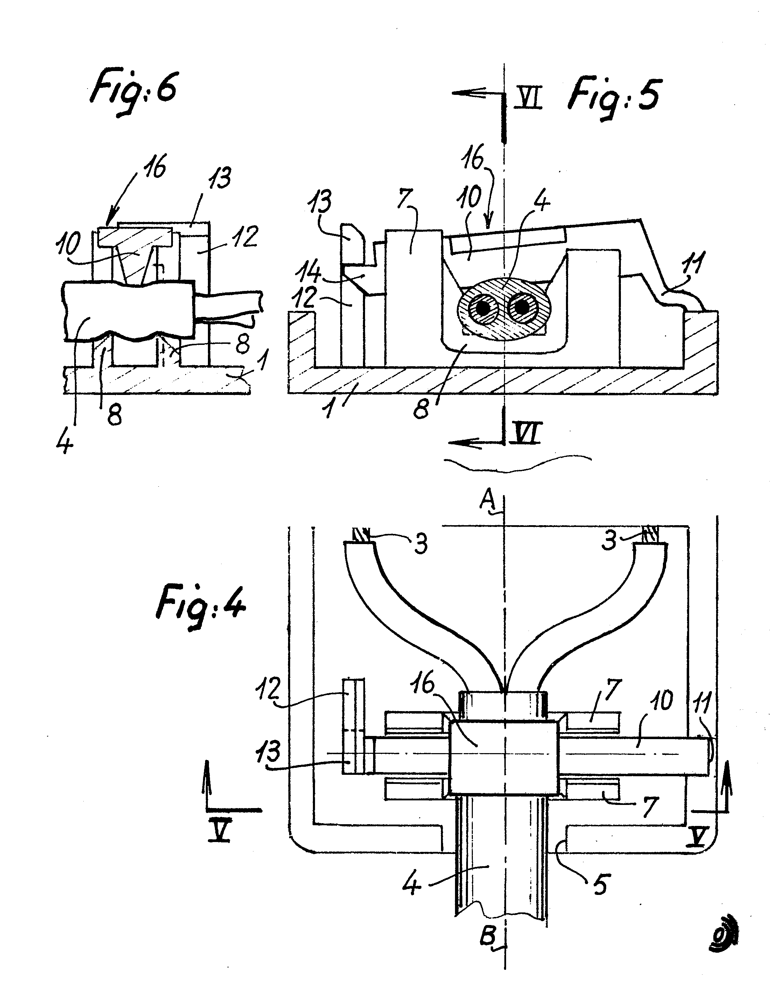

Ce dispositif comprend un siège de réception destiné à recevoir l'extrémité du câble 4. Ce siège est formé par deux échancrures 6 prévues, l'une en regard de l'autre, dans deux joues parallèles 7 qui s'étendent perpendiculairement au-dessus du socle 1. Ces joues sont venues de moulage avec ce socle et elles sont disposées transversalement à l'axe A-B de la position prévue pour l'extrémité du câble 4. Le fond des échancrures 6 constitue en quelque sorte deux nervures parallèles 8 qui sont destinées à servir de supports à l'extrémité du câble 4. Comme représenté sur la figure 3, le bord de ces nervures est de préférence biseauté de façon à se terminer par une arête 9 qui est susceptible de s'imprimer dans la matière de la gaine isolante du câble 4.

Le présent dispositif comporte par ailleurs une barrette pivotante 10 de blocage dont l'une des extrémités est montée articulée sur le socle 1. Le plan médian X-Y de cette barrette s'étend parallèlement aux deux joues 7 et il est situé au milieu de l'intervalle existant entre celles-ci. Dans l'exemple représenté aux figures 1 à 6, l'articulation de cette barrette de blocage sur le socle 1 est assurée par une languette amincie de liaison 11, l'ensemble étant moulé en une matière plastique appropriée permettant une flexibilité suffisante de cette zone pour l'articulation voulue de la barrette 10. Cette matière peut être par exemple du polypropylène ou une résine polyamide.

L'articulation ainsi constituée est située sur l'un des côtés du siège de réception 8 du câble 4. Etant donné que cette articulation permet un pivotement de 90° environ de la barrette 10 de blocage, cette dernière dégage complètement ce siège, dans sa position relevée d'attente. Ceci permet donc une mise en place aisée de l'extrémité du câble 4 sur celui-ci.

Cependant lorsqu'elle est rabattue dans sa position de blocage, la barrette 10 vient se placer au-dessus du siège 8 entre les deux joues parallèles 7. Or du côté opposé à l'articulation 11, il est prévu un organe de retenue apte à assurer le verrouillage de la barrette 10 dans cette position. Dans l'exemple représenté cet organe consiste en une patte flexible 12 se terminant par un crochet de retenue 13 apte à s'engager au-dessus d'une dent saillante 14 portée par l'extrémité correspondante de la barrette 10. Cette dent peut être engagée sous ce crochet par déformation élastique momentanée de la patte 12. Mais du fait de son élasticité, celle-ci assure ensuite un parfait verrouillage de la barrette 10 dans sa position de blocage.

Le dimensionnement des diverses pièces est tel que le bord d'appui 15 de la barrette 10 comprime alors la gaine isolante du câble 4. De préférence ce bord est aminci par rapport au corps même de la barrette 10 pour que celui-ci puisse s'imprimer dans la matière de la gaine isolante 4, de même que les bords des supports des deux nervures 8 du siège de réception. Dans ces conditions, l'extrémité du câble 4 est amenée à subir des déformations transversales qui forment des sortes d'ondulations, comme représenté sur la figure 6. Ceci assure un parfait ancrage en place de l'extrémité du câble 4 qui ne risque pas de se trouver arrachée sous l'effet d'efforts de traction.

L'effacement momentané du crochet de retenue 13 est assuré automatiquement par la pression exercée sur celui-ci par l'extrémité correspondante de la barrette 10 lors de son rabattement. A cet effet la dent saillante 14 de cette barrette présente une rampe apte à provoquer cet effacement. Pour faciliter la manoeuvre de la barrette 10 et permettre d'exercer par son intermédiaire une forte pression sur le câble 4, cette barrette peut avantageusement comporter une touche plate d'appui 16 sur son côté opposé à son bord de pression 14.

Il convient de noter qu'après son rabattement, la barrette 10 se trouve placée entre les deux joues 7. En conséquence elle est immobilisée dans le sens de l'axe AB du câble. De ce fait une forte traction exercée sur celui-ci ne risque pas de provoquer un dégagement intempestif de la barrette 10 par rapport au crochet de retenue 13. Ceci assure donc une parfaite sécurité d'immobilisation du câble 4.

Comme il a déjà été indiqué, les divers éléments constitutifs du présent dispositif sont réalisés par moulage d'une seule pièce avec la paroi correspondante du boîtier de l'appareil respectif, en l'occurrence avec son socle 1. Dans ces conditions le prix de revient du présent dispositif est extrêmement faible.

A ce sujet il convient de rappeler que la présente invention a non seulement pour objet le dispositif serre-câble tel que décrit précédemment, mais également les appareils électriques de nature quelconque qui sont équipés d'un tel dispositif.

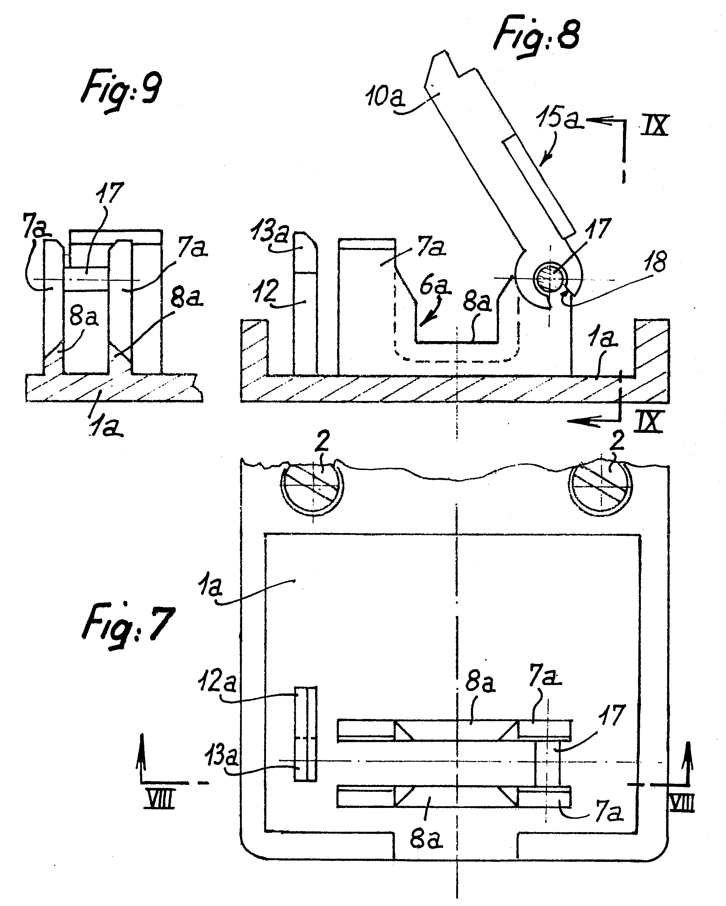

Les figures 7 à 9 représentent une autre forme de réalisation du présent dispositif serre-câble. Dans celle-ci la conception générale du dispositif en cause reste la même que précédemment. En effet, la seule différence réside dans le fait que la barrette de blocage 10a ne fait pas corps avec le socle 1a de l'appareil correspondant. En effet, cette barrette est constituée par une pièce distincte fixée par accrochage élastique sur un axe d'articulation 17 porté par les deux joues parallèles 7a du siège de réception. A cet effet l'alésage, pratiqué dans l'extrémité correspondante de cette barrette pour recevoir l'axe 17, communique avec l'extérieur par une fente 18 de moindre largeur pour former une sorte de pince élastique permettant son enclenchement sur l'axe 17. En conséquence, après cet enclenchement élastique sur l'axe 17, cette barrette est pratiquement imperdable. Cependant, abstraction faite de cette différence, la structure du présent dispositif est la même que précédemment. Dans ces conditions les divers éléments constitutifs de celui-ci sont indiqués par les mêmes chiffres de référence affectés de l'indice "a".

Cette seconde forme de réalisation présente un intérêt dans le cas où la matière moulée, constituant le socle 1a de l'appareil correspondant, est suffisamment élastique pour permettre la flexion de la patte de verrouillage 12a, mais ne permet pas néanmoins la réalisation d'une languette élastique de liaison formant charnière, telle que la languette 11 prévue dans la première forme de réalisation.

Cependant le dispositif serre-câble selon l'invention peut faire l'objet de diverses autres variantes. Ainsi les profils particuliers, prévus sur les bords de support des nervures 8 du siège de réception, pourraient être remplacés par des picots ou des saillies de forme convenable, aptes à pénétrer légèrement dans la matière de la gaine du câble à immobiliser, ou au moins à provoquer une déformation de celle-ci.

## Revendications

1.- Dispositif serre-câble destiné à l'immobilisation d'un câble conducteur à l'intérieur d'un appareil électrique de type mobile, ce dispositif comportant une barrette pivotante de blocage, articulée à l'une de ses extrémités et qui, dans sa position de rabattement, se trouve placée en regard d'un siège de réception apte à recevoir le câble à immobiliser, des moyens de verrouillage assurant la retenue de la barrette de blocage dans sa position de rabattement, caractérisée en ce que le siège de réception du câble (4) à immobiliser est constitué par le fond de deux échancrures (6), prévues l'une en regard de l'autre, dans deux joues parallèles (7) solidaires de la paroi correspondante (1) du boîtier de l'appareil et qui sont disposées transversalement à l'axe (A-B) de la position prévue pour l'extrémité du câble (4), la barrette pivotante (10) de blocage venant se placer entre ces deux joues dans sa position de rabattement.

2.- Dispositif serre-câble selon la revendication 1, caractérisé en ce que l'axe d'articulation (17) de la barrette pivotante (10) de blocage est porté par les joues parallèles (7) formant le siège de réception, et l'extrémité correspondante de cette barrette comporte une partie formant pince élastique pour son enclenchement sur cet axe.

3.- Appareil électrique de type mobile, caractérisé en ce qu'il comporte un dispositif serre-câble selon l'une des revendications précédentes, lequel comprend, pour recevoir le câble (4) à immobiliser, un siège de réception constitué par le fond de deux échancrures (6) prévues l'une en regard de l'autre, dans deux joues parallèles (7) solidaires de la paroi correspondante (1) du boîtier de l'appareil et qui sont disposées transversalement à l'axe (A-B) de la position prévue pour l'extrémité du câble (4), la barrette pivotante (10) de blocage venant se placer entre ces deux joues dans sa position de rabattement.

0273786

Fig:2

Fig:3

Fig:1

0273786

Fig:6

Fig:5

Fig:4

0273786

Fig.8

Fig.9

Fig.7